# EUROPÄISCHE PATENTSCHRIFT

(11) **EP 2 106 901 B1**
(45) Veröffentlichungstag und Bekanntmachung des Hinweises auf die Patenterteilung: **09.02.2011**
(21) Anmeldenummer: 09152433.0
(22) Anmeldetag: 10.02.2009
(51) Int. Cl.: B29D 30/30, B29D 30/16, B29D 30/60, B29C 47/92, B29C 43/24

(54) **Verfahren und Vorrichtung zum Transportieren einer extrudierten Rundschnur aus einer Kautschukmischung zu einer Kalandriereinrichtung**
Device and method for transporting an extruded round cord made of a natural rubber mixture for a calendering device
Procédé et dispositif de transport d'une corde circulaire extrudée à partir d'un mélange de caoutchouc vers un dispositif de calandrage

(30) Priorität: 01.04.2008 DE 102008016569
(43) Veröffentlichungstag der Anmeldung: 07.10.2009
(73) Patentinhaber: Continental Reifen Deutschland GmbH, 30165 Hannover (DE)
(72) Erfinder: Geffert, Ulrich, 31848 Bad Münder (DE); Kastens, Sven, 30890 Barsinghausen (DE)
(74) Vertreter: Finger, Karsten

(56) Entgegenhaltungen:
- EP-A- 0 485 127
- EP-A- 0 671 255
- EP-A- 1 815 971
- WO-A-2007/088455
- DE-A1- 10 306 114
- US-A- 4 097 566

## Beschreibung

Die Erfindung betrifft ein Verfahren und eine Vorrichtung zum Transportieren einer extrudierten Rundschnur aus einer Kautschukmischung zu einer Kalandriereinrichtung, in welcher ein Materialstreifen gebildet wird, der auf einen Reifenrohling oder eine Reifenaufbautrommel aufgespult wird.

Nach den bekannten Verfahren und mit den bekannten Vorrichtungen zum Aufspulen eines Materialstreifens aus einer Rohgummimischung wird eine vorerst extrudierte Rundschnur mittels eines Kalandrierprozesses in eine geometrisch definierte Form gebracht. Der derart hergestellte Materialstreifen wird mittels einer Belegerolle auf einen Reifenrohling aufgespult. Um den Aufspulprozess zu regeln ist es üblich, die Rundschnur zwischen dem Extruder und der Kalandriereinrichtung durchhängen zu lassen und mit einem Lichtschranken-System abzutasten, um die Position der herunter hängenden Rundschnur zu erfassen und um derart in Abhängigkeit vom Durchhang der Schnur die Kalandergeschwindigkeit zu regeln. Aus der WO 2007/045684 A1 ist ein Tänzersystem bekannt, bei welchem eine Umlenkrolle verwendet wird, die über ein definiertes Gewicht die Rundschnur in die Tänzerschleife zwingt. Sowohl beim Durchhängen als auch in der Tänzerschleife verlängert sich die Rundschnur unerwünschter Weise. Die beim Starten und Stoppen der Extrusionsprozesses in der Rundschnur auftretenden Einschnürungen können in den bekannten Vorrichtungen nicht ausgeglichen werden. Das Eigengewicht der Rundschnur und die Viskosität ihrer Gummimischung nehmen somit erheblichen Einfluss auf den Gummimassenstrom zur Kalandriereinrichtung. Ein weiteres verfahren and eine weitere Vorrichtung zum Herstellen eines Reifenbauteils auf einer Reifenaufbautrommel ist in der EP 0485 127 A1 gezeigt. Bei diesem Verfahren erfolgt die Regelung der Vorrichtung in Abhängigkeit von der Vulkanisations geschwindigkeit der Rohgummimischung. Die Erfahrung zeigt, dass bei den bekannten Verfahren in Abhängigkeit von der Temperatur, der Viskosität der Gummimischung und dem Betriebszustand (Starten, Stoppen) die Geometrie des in der Kalandriereinrichtung hergestellten Materialstreifens schwankt. Ein weiterer Nachteil der bekannten Verfahren und Vorrichtungen ist, dass die für einen stabilen Kalandrierprozess erforderliche Zugspannung der Rundschnur gar nicht oder nur ungleichmäßig, etwa über Gewichte, eingestellt und nicht geregelt werden kann.

Der Erfindung liegt die Aufgabe zugrunde, ein Verfahren und eine Vorrichtung der eingangs genannten Art derart auszuführen, dass der in der Kalandriereinrichtung geformte Materialstreifen eine gleichmäßige Geometrie aufweist.

Was das Verfahren betrifft wird die gestellte Aufgabe erfindungsgemäß dadurch gelöst, dass die Rundschnur unmittelbar nach der Extrusion auf eine Fördereinrichtung gelegt wird, deren Geschwindigkeit in Abhängigkeit von der Extruder-Austrittsgeschwindigkeit der Rundschnur geregelt wird, wobei zwischen der Fördereinrichtung und der Kalandriereinrichtung der Durchmesser bzw. der Querschnitt der Rundschnur ständig gemessen wird und die Kalandriergeschwindigkeit in Abhängigkeit vom Durchmesser bzw. Querschnitt der Rundschnur eingestellt und geregelt wird.

Was die Vorrichtung betrifft wird die gestellte Aufgabe erfindungsgemäß dadurch gelöst, dass eine Fördereinrichtung vorgesehen ist, welche dem Extruder unmittelbar nachgeordnet ist und die Rundschnur vom Extruder zur Kalandriereinrichtung befördert, wobei eine erste Sensoreinrichtung zum Erfassen der Extruder-Austrittsgeschwindigkeit der Rundschnur und eine Einrichtung zum Regeln der Fördergeschwindigkeit der Fördereinrichtung in Abhängigkeit von der Extruder-Austrittsgeschwindigkeit der Rundschnur vorgesehen sind, und wobei eine weitere Sensoreinrichtung zum Erfassen des Durchmessers bzw. des Querschnittes der Rundschnur unmittelbar vor der Kalandriereinrichtung und eine Einrichtung zum Regeln der Kalandriergeschwindigkeit in Abhängigkeit vom Durchmesser bzw. Querschnitt der Rundschnur vorgesehen sind. Die Erfindung gestattet daher ein Anpassen des Kalandrierprozesses an prozessbedingte Unterschiede im Querschnitt der extrudierten Rundschnur. Weist beispielsweise die extrudierte Rundschnur am Beginn des Extrusionsprozesses Einschnürungen auf, wird die Kalandriergeschwindigkeit kurzzeitig reduziert, um dem Kalanderspalt einen konstanten Massestrom zuzuführen. Wird die Rundschnur prozessbedingt etwas dicker hergestellt, wird der Massestrom vor dem Kalander größer und es wird die Kalandergeschwindigkeit entsprechend höher geregelt.

Die Erfindung gestattet ferner das Herstellen eines qualitativ einwandfreien Materialstreifens zum Aufspulen auf den Reifenrohling beziehungsweise die Reifenaufbautrommel. Es können auch Streifen mit kleinen Querschnitten prozesssicher hergestellt und aufgespult werden. Das erfindungsgemäße Verfahren und die erfindungsgemäße Vorrichtung ermöglichen zudem ein vollautomatisches Führen der Rohgummirundschnur vom Extruder bis zur Kalandriereinrichtung und des in der Kalandriereinrichtung gebildeten Materialstreifens bis zum Auflegen auf den Reifenrohling beziehungsweise die Reifenaufbautrommel. Der Platzbedarf der erfindungsgemäßen Vorrichtung ist gering, da der Extruder relativ nahe der Kalandriereinrichtung positioniert werden kann. Der kürzere Abstand trägt zusätzlich zur Verbesserung der Qualität des hergestellten Materialstreifens bei und verkürzt Prozessschritte.

Bei einer bevorzugten Ausführungsform des erfindungsgemäßen Verfahrens wird die Geschwindigkeit der Fördereinrichtung etwas größer geregelt als die Extruder-Austrittsgeschwindigkeit der Rundschnur, um derart die Prozesssicherheit zu unterstützen und zu optimieren.

Zur Ermittlung der Extruder-Austrittsgeschwindigkeit der Rundschnur und zur ständigen Messung des Durchmessers der Rundschnur vor der Kalandriereinrichtung eignen sich an sich bekannte Sensoren beziehungsweise Sensoreinrichtungen, insbesondere solche, welche zumindest einen Lichtsensor aufweisen.

Zur Anpassung der Geschwindigkeit der Fördereinrichtung an die Extruder-Austrittsgeschwindigkeit der Rundschnur kann zweckmäßigerweise ein regelbarer Motor vorgesehen sein.

Von besonderem Vorteil ist es, die Fördereinrichtung schwenkbar anzuordnen, wobei die Schwenkachse extruderseitig positioniert ist. Dies hat beispielsweise den Vorteil, dass zu Beginn des Prozesses die Fördereinrichtung die Rundschnur dem Kalanderspalt der Kalandriereinrichtung bei abgesenktem Förderband optimal zuführen kann. Zusätzlich kann vorgesehen sein, die Position des verstellbaren Förderbandes messtechnisch zu erfassen, um beim Starten und Stoppen des Extrusionsbeziehungsweise Spulprozesses regelnd eingreifen zu können.

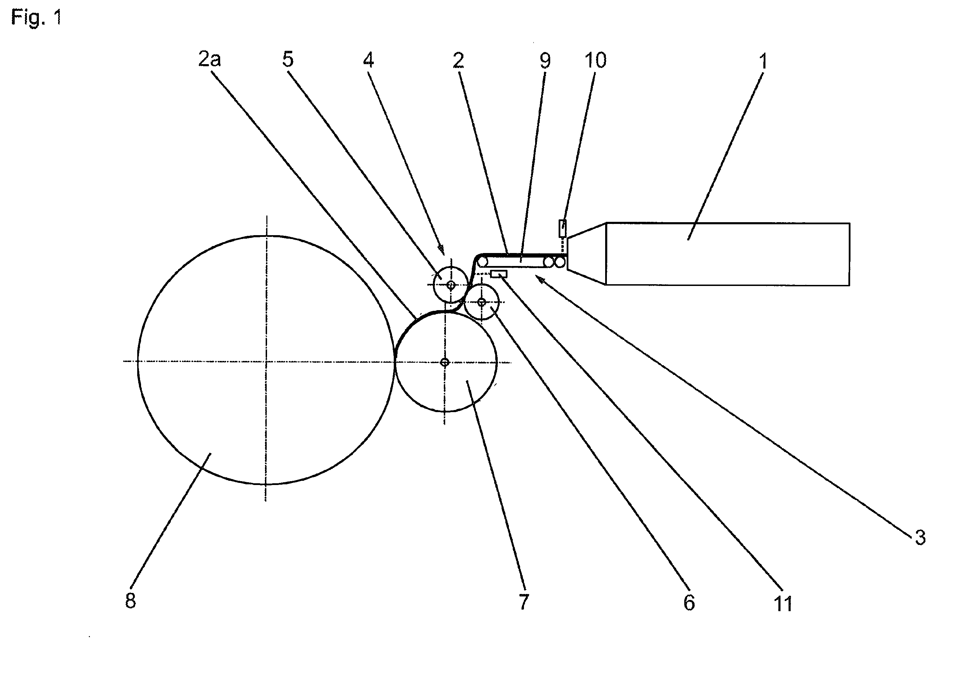

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 eine Ansicht einer Ausführungsvariante einer erfindungsgemäßen Vorrichtung und
Fig. 2 und Fig. 3 unterschiedliche Ansichten einer weiteren Ausführungsvariante der Erfindung.

Die Figuren zeigen eine Vorrichtung zum Transportieren und Kalandrieren einer aus einer Rohgummimischung bestehenden extrudierten Rundschnur 2. Die Vorrichtung weist eine Zuführeinheit 3 zum Befördern der aus einem Extruder 1 austretenden Rundschnur 2 zu einer Kalandriereinrichtung 4 auf, welche bei den gezeigten Ausführungsformen zwei Kalanderrollen 5, 6 mit zumindest im Wesentlichen übereinstimmenden Durchmessern aufweist. Die eine der beiden Kalanderrollen 5, 6 weist einen zylindrischen, unkonturierten Außenumfang auf, die zweite ist mittels einer nicht gezeigten, in Umfangsrichtung umlaufenden Nut konturiert, sodass die Rundschnur 2 zwischen den beiden Kalanderrollen 5, 6 zu einem Materialstreifen 2a verformt wird, dessen Querschnittsform durch die Kontur der Nut in der einen Kalanderrolle 5, 6 bestimmt wird. Je nach Nutkontur kann derart beispielsweise ein Materialstreifen 2a mit einem etwa linsenförmigen, einem etwa rechteckförmigen oder einem etwa trapezförmigen Querschnitt erstellt werden. Der Materialstreifen 2a wird mittels einer Belegerolle 7 auf einen in Rotation versetzten, in den Figuren angedeuteten Reifenrohling 8 oder unmittelbar auf eine Reifenaufbautrommel durch spiraliges Wickeln aufgebracht und bildet derart einen Reifenbauteil, beispielsweise einen Laufstreifen oder Laufstreifenteil, eine Seitenwand, die Innenschicht oder ein Wulstkernprofil.

Die Zuführeinheit 3 weist ein insbesondere als Endlosband ausgeführtes Förderband 9 auf, welches von einem nicht gezeigten, regelbaren Motor angetrieben wird. Die Einstellung beziehungsweise Regelung der Geschwindigkeit des Förderbandes 9 erfolgt in Abhängigkeit von der Extruder-Austrittsgeschwindigkeit der Rundschnur 2, die von einer unmittelbar dem Extruder 1 nachgeordneten Sensoreinrichtung 10, beispielsweise mit zumindest einem Lichtsensor, ständig gemessen wird. Die Regelung erfolgt in einer nicht gezeigten Regeleinrichtung derart, dass die Geschwindigkeit des Förderbandes 9 etwas größer eingestellt wird als die Geschwindigkeit der Rundschnur 2. Eine zweite Sensoreinrichtung 11, welche dem Förderband 9 nachgeordnet und der Kalandriereinrichtung 4 vorgeordnet ist, misst ständig den Durchmesser der bewegten Rundschnur 2 vor ihrem Eintritt in die Kalandriereinrichtung 4. Die Rotationsgeschwindigkeit der Kalanderrollen 5, 6 wird über eine entsprechende Einrichtung in Abhängigkeit von dem mittels der Sensoreinrichtung 11 ermittelten Durchmesser der Rundschnur 2 eingestellt und geregelt, um zu gewährleisten, dass dem Kalanderspalt jene Masse an Rundschnur 2 zugeführt wird, die einen konstanten Querschnitt des Materialstreifens 2a gewährleistet.

Wird beispielsweise die Rundschnur 2 prozessbedingt etwas dünner extrudiert, wird die Geschwindigkeit der Kalanderrollen 4, 5 entsprechend reduziert, um der Kalandriereinrichtung 6 einen konstanten Massestrom zuzuführen. Wird der Massestrom vor der Kalandriereinrichtung 4 bei einer dickeren Rundschnur 2 größer, beispielsweise wenn die Rundschnur 2 prozessbedingt dicker extrudiert wird, so wird die Geschwindigkeit der Kalandriereinrichtung 4 erhöht.

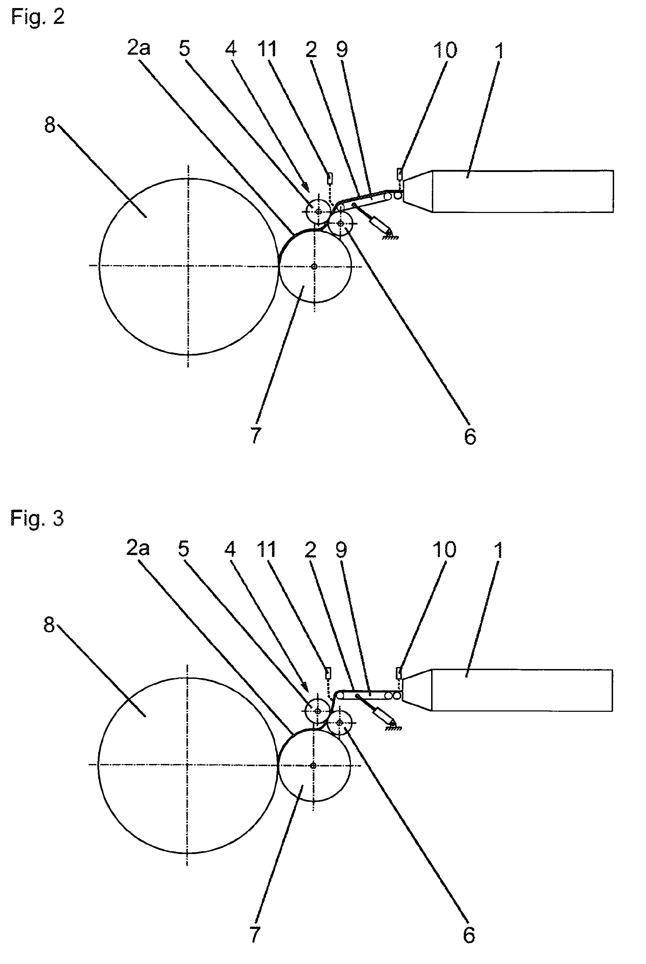

Fig. 2 und Fig. 3 zeigen eine Ausführungsvariante mit einem schwenkbar bzw. verstellbar angeordnetem Förderband 9. Die Schwenkachse des Förderbandes 9 wird an dessen dem Extruder 1 zugewandten Endabschnitt vorgesehen. Eine am Förderband 9 angreifende Lineareinheit 12 übernimmt das Anheben und Absenken des Förderbandes 9. Zu Beginn des Prozesses wird bei abgesenktem Förderband 9 die Rundschnur 2 dem Kalanderspalt der Kalandriereinrichtung 4 zugeführt und hier eingefädelt, sodass derart eine optimale und prozesssichere Materialzufuhr zur Kalandriereinrichtung 4 gewährleistet ist. Nach dem Einfädeln wird das Förderband 9 in seine angehobene, etwa waagrechte Lage gebracht.

Wird die Position des verstellbaren Förderbandes 9 messtechnisch, beispielsweise mittels eines Encoders, erfasst, so kann ein beim Starten und Stoppen des Extrusions- bzw. Spulprozesses auftretender Materialüberschuss "gespeichert" werden. Wie erwähnt befindet sich während des Spulprozesses das Förderband 9 in der waagrechten Position, wie in Fig. 3 gezeigt. Beim Anhalten des Extruders 1 wird zunächst das Förderband 9 nach unten geschwenkt, um dann durch ein kontrolliertes Hochschwenken die überschüssige Rundschnur 2, die nach dem Abschneiden des Spulstreifens noch aus dem Extruder 1 austritt, aufzunehmen. Beim Anfahren des Spulprozesses und des Extruders ist man bestrebt, möglichst gleichmäßig und schnell auf "Spulgeschwindigkeit" zu beschleunigen. Durch die Trägheit des Extruders beschleunigt dieser langsamer als der Spulkopf, erreicht aber dann relativ schnell die Extrusionsgeschwindigkeit. Um den Anfahrprozeß zu vergleichmäßigen, wird durch Absenken des Förderbandes "gespeichertes" Material in der Anfangsphase zugeführt und mit dem Spulen begonnen, bis der Extruder das "Anfahrloch" überwunden hat. Anschließend wird das System auf Normalbetrieb umgestellt, wobei das Förderband 9 wieder in die waagrechte Position gebracht ist.

Die Erfindung ist auf die dargestellten und beschriebenen Ausführungsformen nicht eingeschränkt. Alternativ zu einer Erfassung des Durchmessers der Rundschnur kann ihre Querschnittsfläche gemessen werden, was jedoch aufwendiger ist. Nachdem die Rundschnur ihren runden Querschnitt auch bei einer Änderung ihre Querschnittsfläche behält, kann vom Durchmesser auf die Querschnittsfläche geschlossen werden. Es kann beispielsweise ein teleskopisches Förderband verwendet werden, dessen Transportflächenlänge variabel eingestellt bzw. verändert werden kann. Diese Maßnahme erlaubt ein stationäres Anordnen des Extruders 1, da die Transportfläche des Förderbandes an den Extruder 1 herangefahren werden kann. Bei einer weiteren, nicht gezeigten Ausführung ist es möglich, zwei oder mehr Extruder, beispielsweise für Rundschnüre unterschiedlichen Durchmessers oder unterschiedlichen Materials, vorzusehen und das Förderband 9 derart verstellbar anzuordnen, dass es wahlweise zu einem dieser Extruder ausgerichtet werden kann.

### Bezugsziffernliste

- 1: Extruder
- 2: Rundschnur
- 2a: Materialstreifen
- 3: Zuführeinheit
- 4: Kalandriereinrichtung
- 5: Kalanderrollen
- 6: Kalanderrollen
- 7: Belegerolle
- 8: Reifenrohling
- 9: Fördereinrichtung
- 10: Sensoreinrichtung
- 11: Sensoreinrichtung
- 12: Lineareinheit

## Patentansprüche

1. Verfahren zum Transportieren einer extrudierten Rundschnur (2) aus einer Kautschukmischung zu einer Kalandriereinrichtung (4), in welcher ein Materialstreifen (2a) gebildet wird, der auf einen Reifenrohling (8) oder eine Reifenaufbautrommel aufgebracht wird,
**dadurch gekennzeichnet,**
**dass** die Rundschnur (2) unmittelbar nach der Extrusion auf eine Fördereinrichtung (9) gelegt wird, deren Geschwindigkeit in Abhängigkeit von der Extruder-Austrittsgeschwindigkeit der Rundschnur (2) geregelt wird, wobei zwischen der Fördereinrichtung (9) und der Kalandriereinrichtung (4) der Durchmesser bzw. der Querschnitt der Rundschnur (2) ständig gemessen wird und die Kalandriergeschwindigkeit in Abhängigkeit vom Durchmesser bzw. Querschnitt der Rundschnur (2) eingestellt und geregelt wird.

2. Verfahren nach Anspruch 1, **dadurch gekennzeichnet, dass** die Geschwindigkeit der Fördereinrichtung (9) etwas größer geregelt wird als die Extruder-Austrittsgeschwindigkeit der Rundschnur (2).

3. Verfahren nach Anspruch 1 oder 2, **dadurch gekennzeichnet, dass** die Extruder-Austrittsgeschwindigkeit der Rundschnur (2) mittels einer Sensoreinrichtung (10), insbesondere unter Verwendung zumindest eines Lichtsensors, ermittelt wird.

4. Verfahren nach Anspruch 1, **dadurch gekennzeichnet, dass** der Durchmesser der Rundschnur (2) mittels einer weiteren Sensoreinrichtung (11) ermittelt wird.

5. Vorrichtung zum Transportieren einer extrudierten Rundschnur (2) aus einer Kautschukmischung zu einer Kalandriereinrichtung (4), in welcher ein Materialstreifen (2a) gebildet wird, der auf einen Reifenrohling (8) oder eine Reifenaufbautrommel aufgebracht wird,
**dadurch gekennzeichnet,**
**dass** eine Fördereinrichtung (9) vorgesehen ist, welche dem Extruder (1) unmittelbar nachgeordnet ist und die Rundschnur (2) vom Extruder (1) zur Kalandriereinrichtung (4) befördert, wobei eine erste Sensoreinrichtung zum Erfassen der Extruder-Austrittsgeschwindigkeit der Rundschnur (2) und eine Einrichtung zum Regeln der Fördergeschwindigkeit der Fördereinrichtung in Abhängigkeit von der Extruder-Austrittsgeschwindigkeit der Rundschnur vorgesehen sind, und wobei eine weitere Sensoreinrichtung zum Erfassen des Durchmessers bzw. Querschnittes der Rundschnur (2) unmittelbar vor der Kalandriereinrichtung (4) und eine Einrichtung zum Regeln der Kalandriergeschwindigkeit in Abhängigkeit vom Querschnitt der Rundschnur vorgesehen sind.

6. Vorrichtung nach Anspruch 5, **dadurch gekennzeichnet, dass** die Sensoreinrichtungen (10, 11) Lichtsensoren sind oder Lichtsensoren aufweisen.

7. Vorrichtung nach Anspruch 5, **dadurch gekennzeichnet, dass** die Fördereinrichtung (9) durch einen regelbaren Motor antreibbar ist.

8. Vorrichtung nach Anspruch 5, **dadurch gekennzeichnet, dass** die Fördereinrichtung (9) schwenkbar ist, wobei die Schwenkachse extruderseitig angeordnet ist.

9. Vorrichtung nach einem der Ansprüche 5 bis 8, **dadurch gekennzeichnet, dass** die Fördereinrichtung ein endloses Förderband (9) aufweist.

## Claims

1. Method for transporting an extruded round cord (2) made of a rubber mixture to a calendering device (4) in which there is formed a material strip (2a) that is applied to a tyre blank (8) or a tyre building drum, **characterized**
**in that**, directly after extrusion, the round cord (2) is laid on a conveying device (9), the speed of which is set as a function of the speed at which the round cord (2) exits the extruder, wherein the diameter or the cross section of the round cord (2) is measured continuously between the conveying device (9) and the calendering device (4) and the calendering speed is adjusted and set as a function of the diameter or cross section of the round cord (2).

2. Method according to Claim 1, **characterized in that** the speed of the conveying device (9) is set somewhat faster than the speed at which the round cord (2) exits the extruder.

3. Method according to Claim 1 or 2, **characterized in that** the speed at which the round cord (2) exits the extruder is determined by means of a sensor device (10), in particular using at least one light sensor.

4. Method according to Claim 1, **characterized in that** the diameter of the round cord (2) is determined by means of a further sensor device (11).

5. Apparatus for transporting an extruded round cord (2) made of a rubber mixture to a calendering device (4) in which there is formed a material strip (2a) that is applied to a tyre blank (8) or a tyre building drum, **characterized**
**in that** a conveying device (9) is provided, said conveying device being arranged directly downstream of the extruder (1) and conveying the round cord (2) from the extruder (1) to the calendering device (4), wherein a first sensor device for detecting the speed at which the round cord (2) exits the extruder and a device for setting the conveying speed of the conveying device as a function of the speed at which the round cord exits the extruder are provided, and wherein a further sensor device for detecting the diameter or cross section of the round cord (2) directly upstream of the calendering device (4) and a device for setting the calendering speed as a function of the cross section of the round cord are provided.

6. Apparatus according to Claim 5, **characterized in that** the sensor devices (10, 11) are light sensors or have light sensors.

7. Apparatus according to Claim 5, **characterized in that** the conveying device (9) can be driven by a variable-speed motor.

8. Apparatus according to Claim 5, **characterized in that** the conveying device (9) is pivotable, wherein the pivot axis is arranged on the extruder side.

9. Apparatus according to one of Claims 5 to 8, **characterized in that** the conveying device has an endless conveying belt (9).

## Revendications

1. Procédé de transport d'un cordon rond extrudé (2) en un mélange de caoutchouc vers un dispositif de calandrage (4) dans lequel est formé un ruban de matériau (2a) appliqué sur une ébauche (8) de bandage de roue ou sur un tambour de montage de bandage de roue,
**caractérisé en ce que**
directement après l'extrusion, le cordon rond (2) est posé sur un dispositif de transport (9) dont la vitesse est régulée en fonction de la vitesse de sortie du cordon rond (2) hors de l'extrudeuse, le diamètre ou la section transversale du cordon rond (2) étant mesurés en permanence entre le dispositif de transport (9) et le dispositif de calandrage (4) et la vitesse de calandrage étant réglée et régulée en fonction du diamètre ou de la section transversale du cordon rond (2).

2. Procédé selon la revendication 1, **caractérisé en ce que** la vitesse du dispositif de transport (9) est réglée à une valeur légèrement supérieure à la vitesse de sortie du cordon rond (2) hors de l'extrudeuse.

3. Procédé selon les revendications 1 ou 2, **caractérisé en ce que** la vitesse de sortie du cordon rond (2) hors de l'extrudeuse est déterminée au moyen d'un dispositif de détection (10) qui recourt en particulier à au moins un détecteur de lumière.

4. Procédé selon la revendication 1, **caractérisé en ce que** le diamètre du cordon rond (2) est déterminé au moyen d'un autre dispositif de détection (11).

5. Dispositif de transport d'un cordon rond (2) extrudé en un mélange de caoutchouc vers un dispositif de calandrage (4) dans lequel est formé un ruban (2a) de matériau qui est appliqué sur une ébauche (8) de bandage de roue ou sur un tambour de montage de bandage de roue,
**caractérisé en ce qu'**il présente
un dispositif de transport (9) qui est disposé immédiatement après l'extrudeuse (1) et qui transporte le cordon rond (2) de l'extrudeuse (1) au dispositif de calandrage (4),
un premier dispositif de détection qui détecte la vitesse de sortie du cordon rond (2) hors de l'extrudeuse,
un dispositif de régulation de la vitesse de transport du dispositif de transport en fonction de la vitesse de sortie du cordon rond hors de l'extrudeuse,
un autre dispositif de détection servant à détecter le diamètre ou la section transversale du cordon rond (2) directement en avant du dispositif de calandrage (4) et
un dispositif de régulation de la vitesse de calandrage en fonction de la section transversale du cordon rond.

6. Dispositif selon la revendication 5, **caractérisé en ce que** les dispositifs de détection (10, 11) sont des détecteurs de lumière ou présentent des détecteurs de lumière.

7. Dispositif selon la revendication 5, **caractérisé en ce que** le dispositif de transport (9) peut être entraîné par un moteur régulable.

8. Dispositif selon la revendication 5, **caractérisé en ce que** le dispositif de transport (9) est pivotant, l'axe de pivotement étant disposé du côté de l'extrudeuse.

9. Dispositif selon l'une des revendications 5 à 8, **caractérisé en ce que** le dispositif de transport présente une bande transporteuse (9) en boucle fermée.
